# EUROPÄISCHE PATENTSCHRIFT

(11) **EP 0 531 699 B1**
(45) Veröffentlichungstag und Bekanntmachung des Hinweises auf die Patenterteilung: **01.05.1996**
(21) Anmeldenummer: 92113151.2
(22) Anmeldetag: 01.08.1992
(51) Int. Cl.: A47J 31/54, A47J 31/36

(54) **Kessel**
Kettle
Bouilloire

(30) Priorität: 13.09.1991 DE 4130447
(43) Veröffentlichungstag der Anmeldung: 17.03.1993
(73) Patentinhaber: Braun Aktiengesellschaft, Frankfurt am Main (DE)
(72) Erfinder: Hufnagl, Walter, W-6231 Sulzbach / Ts. (DE); Schamberg, Stefan, W-6390 Usingen (DE); Schäfer, Gerhard, W-6000 Frankfurt am Main 50 (DE); Müller, Roland, W-6072 Dreieich-Offental (DE); Klawuhn, Manfred, W-6000 Frankfurt am Main 1 (DE)

(56) Entgegenhaltungen:
- DE-U- 7 602 946
- FR-A- 2 091 590
- FR-A- 2 444 437
- GB-A- 2 091 086
- US-A- 3 953 923

## Beschreibung

Die Erfindung betrifft einen drucklosen Kessel für eine Espressomaschine mit einer elektrischen Heizeinrichtung zum Beheizen von Wasser, das zur Herstellung von Brühgetränken in den Kessel einfüllbar ist.

Ein derartiger Kessel ist aus der GB-A-2 091 086 bekannt. Der Kessel dient hier zum Aufheizen von Wasser, das einer Pumpe zugeführt und von dort über eine Leitung in einen Siebkorbträger einer Espressomaschine gepumpt wird. Diese Anordnung weist den Nachteil auf, daß mit diesem Gerät kein Dampf erzeugt werden kann, der bei Espressomaschinen insbesondere auch zum Aufschäumen von Milch dient.

Aus der FR-A-2091590 ist ein Durchlauferhitzer bekannt, an dem unterhalb seiner Trägerplatte eine mit einem Wasserrohr verbundene Heizeinrichtung befestigt ist. Die Trägerplatte dient einerseits zum Abstellen einer Kaffeekanne und andererseits zum Warmhalten von in der Kaffeekanne vorhandenem Brühgetränk. Das Wasserrohr ist zwischen dem Heizeinrichtung und der Trägerplatte ausgebildet, welches zum Aufheizen von Wasser und dem anschließenden Befördern des so hergestellten Brühwassers in einen mit Kaffeemehl befüllbaren Kaffeefilter zur Herstellung von Kaffee dient.

Aufgabe der Erfindung ist es daher, einen drucklosen Kessel für eine Espressomaschine zu schaffen, durch den einerseits mit einer elektrischen Heizeinrichtung Flüssigkeit erhitzt und andererseits auch Dampf erzeugt werden kann, der nicht aus im Kessel verdampftem Wasser stammt.

Diese Aufgabe wird nach der Erfindung dadurch gelöst, daß die elektrische Heizeinrichtung außerhalb des Kessels angeordnet ist, daß die Heizeinrichtung über ein Rohr mit dem Kessel nur in indirektem Wärmekontakt steht, daß in dem Rohr durch Einbringen von kleineren Mengen von Wasser Dampf zum Erhitzen und Aufschäumen von Flüssigkeiten erzeugt werden kann und daß sowohl der Kessel mit dem Rohr wie das Rohr mit der Heizeinrichtung mechanisch verbunden sind.

Durch diese Anordnung ist es zunächst einmal möglich, einerseits im Kessel Wasser aufzukochen und andererseits im Rohr Dampf zu erzeugen. Bei der Herstellung von Dampf sorgt dabei diese Anordnung dafür, daß der überwiegende Teil der von der Heizeinrichtung abgegebenen Wärme bereits im Dampfrohr aufgenommen wird. Dies hat zur Folge, daß bei der Dampferzeugung ein Aufkochen des im Kessel befindlichen Wassers gar nicht oder erst nach längerer Dampferzeugung eintreten kann.

Andererseits reicht die Wärmeankoppelung des Rohrs - falls in diesem kein Dampf erzeugt wird - an den Kessel ohne weiteres aus, um das Wasser im Kessel ausreichend schnell zum Kochen zu bringen. Durch diese Maßnahme kann also eine zusätzliche Hetzeinrichtung, mit der das Rohr thermisch gekoppelt wäre, entfallen.

Selbstverständlich kann das Rohr sowohl am Boden oder an der Seitenwandung des Kessels ausgebildet sein. In dem Rohr kann anstelle von Dampf auch nur heißes Wasser erzeugt werden, wenn in dieses entsprechend große Mengen kaltes Wasser eingespeist werden und somit die von der Heizeinrichtung abgegebene Wärmemenge nicht mehr zur Dampfbildung ausreicht. Auf diese Weise kann die Espressomaschine auch zum Herstellen von Tee verwendet werden, indem eine mit einem Teebeutel, Tee-Ei oder -Netz versehene Tasse mit heißem Wasser aufgegossen wird.

Um einen besonders gleichmäßigen Wärmeübergang von der Hetzeinrichtung auf das Rohr zu gewährleisten, ist es vorteilhaft, daß die Heizeinrichtung von einer Heizschlange gebildet wird, an der das Rohr entlang läuft. Die als Heizschlange ausgebildete Heizeinrichtung bietet weiterhin den Vorteil, daß auf eine besonders kleine Fläche eine besonders starke Heizleistung aufgebracht werden kann. Um eine besonders schnelle und gleichmäßige Erhitzung des Wassers im Kessel zu erreichen, ist das Rohr vorteilhafterweise am Boden des Kessels angeordnet. Es ist zwar auch denkbar, daß das Rohr mit der Heizeinrichtung an der Seitenwandung des Kessels in der Nähe des Bodens ausgebildet ist, doch die beste Wärmeübertragung wird dann erreicht, wenn das Rohr und die Heizeinrichtung am Boden außerhalb des Kessels ausgebildet sind.

Verlaufen die Heizschlange und das Rohr u-förmig am Boden, so überkreuzen sich nicht die Schenkel der Rohre und der Heizschlange, so daß sowohl die Wasseranschlüsse des Rohres wie die elektrischen Anschlüsse der Heinzeinrichtung von der Seite leicht zugänglich sind.

Um einen bestmöglichen Wärmeübergang von der Heizeinrichtung über das Rohr auf den Kessel zu ermöglichen, ist es vorteilhaft, daß die Oberseite des Rohres mit dem Boden des Kessels in Wärmekontakt steht und daß die Heizschlange mit der der Oberseite gegenüberliegenden Unterseite des Rohres in Wärmekontakt steht. Diese Anordnung läßt sich auch besonders einfach herstellen. Es ist aber auch durchaus denkbar, daß die Heizeinrichtung und das Rohr nicht übereinander, sondern am Boden nebeneinander angeordnet sind.

Um den Wärmeübergang von der Heizeinrichtung auf das Rohr und von dort auf den Boden möglichst groß zu halten, sind die Kontaktflächen zwischen Heizung und Rohr und Rohr und Boden abgeflacht ausgebildet.

In vorteilhafter Weise ist vorgesehen, daß am Boden ein in wesentlichen Abschnitten dem Verlauf des Rohres folgendes Halteblech befestigt ist, an dem wiederum das Rohr mit der Heizeinrichtung befestigt ist, so daß diese mit dem Kessel in gutem Wärmekontakt stehen. Das Halteblech vergrößert die Kontaktfläche und somit den Wärmeübergang zum Boden des Kessels hin. Sind dabei am Halteblech Blechlappen ausgebildet, die das Rohr und die Heizschlange von außen oder von innen formschlüssig umgreifen, so können zusätzliche Spannvorrichtungen vermieden werden und es lassen sich das Rohr, die Heizeinrichtung und der Kessel an ihren Berührungsstellen besonders einfach verlöten, wenn Löten als zusätzliches Verbindungsmittel gewählt wird. Weist das Halteblech noch einen Blechabschnitt auf, der in den zwischen den beiden Schenkeln gebildeten Freiraum eingreift, so können hier besonders einfach elektronische bzw. elektrische Bauteile, wie Regler, Thermofühler, Schmelzsicherung etc., befestigt werden. Dabei kann der Blechabschnitt durchgehend von einem Schenkel zum anderen Schenkel verlaufen, er kann aber auch von einzelnen Blechlappen gebildet werden, die in den Freiraum hineinragen.

Weist der zwischen den Schenkeln des Rohres verlaufende Blechabschnitt des Halteblechs einen geringen Abstand zum Boden des Kessels auf, so wird in diesem Bereich keine nennenswerte Wärme zum Boden hin übertragen. Hierdurch ergibt sich der Vorteil, daß die von der Heizeinrichtung erzeugte Wärme weitgehend über das Rohr zum Boden geleitet wird, wodurch, wenn am Rohr bzw. an der Heizeinrichtung oder in ihrer Nähe Thermofühler angebracht sind, diese besonders schnell reagieren und somit eine zu hohe bzw. zu niedrige Temperatur durch Aus- bzw. Einschalten der Heizeinrichtung in kürzester Zeit korrigiert werden kann.

Ein besonders guter Wärmeübergang vom Rohr zum Boden des Kessels wird dadurch erreicht, daß das Rohr am Boden angelötet ist. Wird ein Halteblech verwendet, so ist dann das Halteblech am Boden und das Rohr am Halteblech angelötet. Es ist aber auch denkbar, das Halteblech mit einer Wärmeleitpaste am Boden des Kessels zu kontaktieren und so dieses gleichzeitig am Boden zu befestigen. Hierdurch wird auch ein guter Wärmekontakt bei einfacherer Befestigung erreicht. Ein guter Wärmekontakt bei einer gleichzeitigen innigen Verbindung von Rohr, Heizung und Halteblech wird dann erreicht, wenn das Rohr, die Heizschlange und das Halteblech an ihren Berührungsstellen und/oder an den Rändern ihrer Berührungsstellen miteinander verlötet sind. Der Grad der Verbindung hängt dabei davon ab, wie groß der Wärmeübergang zum Rohr und zum Kessel sein soll.

Um bei einem im Querschnitt verhältnismäßig kleinen Kessel eine große Heizleistung einbringen zu können, weist der Kessel einen im Querschnitt im wesentlichen rechteckigen Boden auf, an dessen längeren Seiten die Schenkel des Rohres und die Schenkel der Heizschlange verlaufen. Diese Anordnung ermöglicht eine möglichst lange Heizschlange, so daß die Wärmeverteilung bei verhältnismäßig hoher Heizleistung ausreichend gleichmäßig und die spezifische Wärmebeaufschlagung auf die Anordnung insgesamt gering sind.

Um dem Kessel heißes Wasser entnehmen zu können, weist dieser eine Entnahmestelle auf. Dabei ist es vorteilhaft, daß die Entnahmestelle am Boden des Kessels angeordnet, die sich vorteilhafterweise in einer Vertiefung befindet. Durch die Vertiefung wird ein Sammelraum gebildet, in dem sich auch noch kleine Mengen an Restwasser sammeln, die dann dem Kessel entnommen werden können, damit dieser nach Gebrauch restlos leer ist.

Erfindungsgemäß läßt sich der Kessel für eine Espressomaschine verwenden, deren Entnahmestelle mit dem Eingang einer regelbaren elektrischen Kolbenpumpe verbunden ist, deren Ausgang das Brühwasser einer mit Kaffeemehl füllbaren Filtereinrichtung zuführt, wobei der Ausgang der Kolbenpumpe über eine Ventileinrichtung wahlweise auch mit dem Rohr verbindbar ist, so daß das dem Rohr zugeleitete Wasser Je nach Wassermenge gezielt zur Dampferzeugung oder zur Erzeugung von Heißwasser verwendet werden kann. Bei der Verwendung des erfindungsgemäßen Kessels in einer Espressomaschine entsteht der Vorteil, daß bei der Zubereitung von Espresso das Kaffeemehl nicht mehr mit überhitztem Wasser beaufschlagt werden kann, was zu einem bitteren Geschmack des Espressogetränks, fehlender "Crema" und Ausschwemmung von unerwünschten ätherischen Ölen führt.

Überhitztes Wasser kann nämlich in sogenannten Thermoblockespressomaschinen (DE-U-76 02 946.4) entstehen, wenn in der Filtereinrichtung fein gemahlenes und/oder stark gepreßtes Kaffeemehl vorhanden ist, das der vor dem Thermoblock liegenden und kaltes Wasser fördernden Pumpe einen hohen Widerstand entgegensetzt, so daß das Wasser zu langsam durch den Thermoblock durchfließt und daher überhitzt wird, wobei das Wasser aufgrund des erhöhten Druckes auch ohne weiteres auf Temperaturen über 100° C kommen kann. Bei der Erfindung kann dagegen mit einer in sehr engen Grenzen gehaltenen Wassertemperatur von etwa 96°C bis 97°C das in einem Siebkorbträger befindliche Espressomehl beaufschlagt werden, ohne daß das Espressomehl überhitzt wird, da aufgrund des offenen Kessels kein überhitztes Wasser entstehen kann, wobei die Pumpe dann dem Kessel nachgeschaltet ist.

Soll mit dem Wasserkessel Dampf erzeugt werden, so wird bei einer Heizleistung einer Heizeinrichtung von ca. 1100 Watt dem Rohr eine Wassermenge von ca. 0, 5 g pro Sekunde über die Kolbenpumpe dosiert zugeführt, so daß Dampf mit ausreichend hohem Druck und hoher Temperatur erzeugt wird, ohne daß dabei das im Kessel befindliche Wasser zu kochen beginnt. Durch die Anordnung des Rohres zwischen der Heizeinrichtung und dem Boden des Behälters wird ermöglicht, daß mit einer einzigen Heizeinrichtung sowohl das im Kessel befindliche Wasser, wie auch Dampf im Rohr erzeugt werden kann, ohne daß dabei das im Kessel befindliche Wasser zu kochen beginnt. Wie eingangs im Zusammenhang mit dem Hauptanspruch beschrieben, kann in dem Rohr auch nur heißes Wasser erzeugt werden, das dann wie der Dampf an der Dampfaustrittsdüse der Espressomaschine austritt oder auch einem gesonderten Ausfluß entnommen werden kann. Heißes Wasser entsteht dann, wenn in das beheizte Rohr deutlich mehr Wasser eingespeist wird als es bei der Dampferzeugung benötigt wird. Auf diese Weise können mit der Espressomaschine auch andere Aufgußgetränke, wie Tee, Kakao oder sogar Boullionsuppe zubereitet werden
Ein Ausführungsbeispiel der Erfindung ist in der Zeichnung dargestellt und wird im folgenden näher erläutert. Es zeigen:
- Fig. 1: Längsschnitt durch einen Wasserkessel nach der Erfindung und
- Fig. 2: Draufsicht in Richtung X von unten her auf den Boden des Wasserkessels nach der Fig. 1.

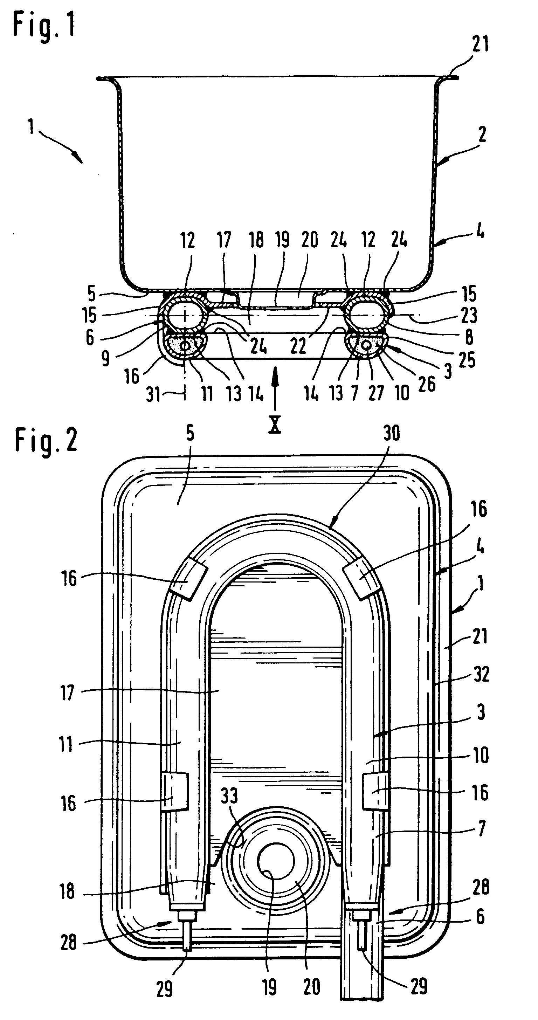

In den Fign. 1 und 2 besteht der Heizkessel 1 aus einem im Querschnitt rechteckigen Kessel 2, der an seinem oberen Rand 21 nach außen hin abgerundet ist. An der Unterseite 22 des Bodens 5 ist ein Halteblech 15, beispielsweise durch Löten oder durch Wärmeleitpaste, mit dem Boden 5 befestigt, das an seinem Außenrand sich senkrecht vom Boden 5 weg erstreckende Blechlappen 16 aufweist, die ein u-förmiges Rohr 6 und eine darunter liegende Heizeinrichtung 3 von außen umgreifen.

Die Heizeinrichtung 3 wird nach Fig. 1 und 2 von einer Heizschlange 7 gebildet, deren abgeflachte Oberseite 14 mit der Unterseite 13 des Rohres, beispielsweise durch Löten, verbunden ist, so daß eine gute Wärmeleitung von der Heizeinrichtung 3 zum Rohr 6 hin entsteht. An die Oberseite 12 des Rohres 6 schmiegt sich das Halteblech 15 an und verläuft in dem Bereich, wo sich keine Blechlappen 16 befinden, etwa bis zur horizontal verlaufenden Mittellinie 23 des Rohres 6.

Der von den beiden Schenkeln 8, 9 gebildete Freiraum 18 ist nach Fig. 1 und 2 von einem Blechabschnitt 17 überzogen, der im Abstand zur Unterseite 22 des Bodens 5 des Kessels 2 verläuft. Wie aus Fig. 1 hervorgeht, sind die Heizeinrichtung 3, das Rohr 6, das Halteblech 15 an den Rändern ihrer Berührungsstellen zusammen gelötet, wie dies durch die Lötnähte 24 angezeigt wird. Da auch das Halteblech 15 mit der Unterseite 22 des Bodens 6 verlötet ist, sind auch hier Lötnähte 24 zu erkennen.

Die Heizeinrichtung 3 besteht nach Fig. 1 aus einer Heizschlange 7, deren Mantel 25 aus gut wärmeleitendem Metall, beispielsweise Kupfer oder Aluminium besteht. Innerhalb des Mantels 25 ist eine Isoliermasse 26 eingefüllt, in die der Heizwendel 27 elektrisch isolierend eingebettet ist. Auch das Rohr 6 sowie das Halteblech 15 bestehen aus einem gut wärmeleitfähigen Material, das vorzugsweise dem Material der Heizschlange 7 entspricht. Es ist aber auch denkbar, das Halteblech 15 wie auch den Kessel 2 aus Edelstahl herzustellen und dieses am Boden 5 des Kessels 2 zu verschweißen oder zu verschrauben. Eine weitere Möglichkeit besteht darin, nur am Boden 5 Blechlappen 16 anzuschweißen, die dann die Aufgabe übernehmen, die zusammengelöteten Rohr- Heizschlangenanordnung 6, 7 gegen den Boden 2 zu pressen, so daß ein guter Wärmeübergang hergestellt wird.

Nach den Figuren 1 und 2 weist der Boden 5 des Kessels 2 eine Vertiefung 20 auf, in der eine als Öffnung ausgebildete Entnahmestelle 19 vorgesehen ist, die mit einer Leitung verbindbar ist, die zu einer in der Zeichnung nicht dargestellten Pumpe führt. Wie aus Fig. 2 hervorgeht weist die u-förmige Heizschlange 7 einen rechten und linken Schenkel 10, 11 auf, an deren freien Enden 28 Kontaktfahnen 29 ausgebildet sind, die die Verbindung zu einer elektrischen Energiequelle herstellen. Die nach Fig. 1 oberhalb der Schenkel 10, 11 verlaufenden Schenkel 8, 9 des Rohres 6 sowie ihr halbkreisförmig verbindender Abschnitt verlaufen parallel und auf gleicher Achse 31 wie die Heizschlange 7.

Die Außenwandung 4 des Kessels 2 wird nach Fig. 2 von einer rechteckigen Querschnittsfläche gebildet, deren längere Seitenwände 32 im wesentlichen parallel und außerhalb zu den Schenkeln der Rohre der Heizung 8, 9, 10, 11 verlaufen. Wie aus Fig. 2 hervorgeht, verläuft der Blechabschnitt 17 an seinem den Kontaktfahnen 29 näheren Ende 33 um die Vertiefung 20 herum, damit diese von unten her besser zugänglich ist.

## Patentansprüche

1. Druckloser Kessel (2) für eine Espressomaschine mit einer elektrischen Heizenrichtung (3) zum Beheizen von Wasser, das zur Herstellung von Brühgetränken in den Kessel (2) einfüllbar ist,
**dadurch gekennzeichnet**,
daß die elektrische Heizeinrichtung (3) außerhalb des Kessels (2) angeordnet ist, daß die Heizeinrichtung (3) über ein Rohr (6) mit dem Kessel (2) nur in indirektem Wärmekontakt steht, daß in dem Rohr (6) durch Einbringen von kleineren Mengen von Wasser Dampf zum Erhitzen und Aufschäumen von Flüssigkeiten erzeugt werden kann und daß sowohl der Kessel (2) mit dem Rohr (6) wie das Rohr (6) mit der Heizeinrichtung (3) mechanisch verbunden sind.

2. Kessel nach Anspruch 1,
**dadurch gekennzeichnet**,
daß die Oberseite (12) des Rohres (6) mit dem Boden (5) des Kessels (2) in Wärmekontakt steht und daß die Heizschlange (7) mit der der Oberseite (12) gegenüberliegenden Unterseite (13) des Rohres (6) in Wärmekontakt steht.

3. Kessel nach Anspruch 2,
**dadurch gekennzeichnet**,
daß die Ober- (12) und Unterseite (13) des Rohres (6) abgeflacht ausgebildet sind und daß die mit der Unterseite des Rohres (6) in Wärmekontakt stehende Oberseite (14) der Heizschlange (7) ebenfalls abgeflacht ist.

4. Kessel nach Anspruch 1,
**dadurch gekennzeichnet**,
daß die Heizeinrichtung (3) von einer Heizschlange (7) gebildet wird, an der das Rohr (6) entlang läuft.

5. Kessel nach Anspruch 4,
**dadurch gekennzeichnet**,
daß das Rohr (6) am Boden (5) des Kessels (2) ausgebildet ist.

6. Kessel nach Anspruch 4,
**dadurch gekennzeichnet**,
daß die Heizschlange (7) und das Rohr (6) u-förmig verlaufen, so daß Schenkel (8, 9 bzw. 10, 11) gebildet werden, die im Abstand nebeneinander verlaufen.

7. Kessel nach Anspruch 1,
**dadurch gekennzeichnet**,
daß am Boden (5) ein in wesentlichen Abschnitten dem Verlauf des Rohres (6) folgendes Halteblech (15) befestigt ist, an dem wiederum das Rohr (6) mit der Heizeinrichtung (3) befestigt ist.

8. Kessel nach Anspruch 7,
**dadurch gekennzeichnet**,
daß am Halteblech (15) Blechlappen (16) ausgebildet sind, die das Rohr (6) und die Heizschlange (7) formschlüssig, vorzugsweise von außen, umgreifen, und daß die Heizeinrichtung (3) mit dem Rohr verlötet ist.

9. Kessel nach Anspruch 7,
**dadurch gekennzeichnet**,
daß das Halteblech (15) einen Blechabschnitt (17) aufweist, der in den zwischen den beiden Schenkeln (10, 11) der Heizschlange (7) gebildeten Freiraum (18) eingreift.

10. Kessel nach Anspruch 9,
**dadurch gekennzeichnet**,
daß der Blechabschnitt (17) des Haltebleches (15) einen geringen Abstand zum Boden (5) des Kessels (2) aufweist.

11. Kessel nach Anspruch 3,
**dadurch gekennzeichnet**,
daß das Rohr (6) am Boden (5) des Kessels (2) angelötet ist.

12. Kessel nach Anspruch 7,
**dadurch gekennzeichnet**,
daß das Halteblech (15) am Boden (5) des Kessels (2) angelötet ist.

13. Kessel nach Anspruch 7,
**dadurch gekennzeichnet**,
daß das Halteblech (15) mit einer Wärmeleitpaste am Boden (5) des Kessels (2) befestigt ist.

14. Kessel nach einem der Ansprüche 12 oder 13,
**dadurch gekennzeichnet**,
daß das Rohr (6) die Heizschlange (7) und das Halteblech (15) an ihren Berührungsstellen und/oder an den Rändern ihrer Berührungsstellen miteinander verlötet sind.

15. Kessel nach Anspruch 4,
**dadurch gekennzeichnet**,
daß der Kessel (2) einen im Querschnitt im wesentlichen rechteckigen Boden (5) aufweist, an dessen längeren Seiten die Schenkel (8, 9) des Rohres (6) und die Schenkel (10, 11) der Heizschlange (7) verlaufen.

16. Kessel nach Anspruch 1,
**dadurch gekennzeichnet**,
daß der Kessel (2) eine Entnahmestelle (19) aufweist.

17. Kessel nach Anspruch 16,
**dadurch gekennzeichnet**,
daß die Entnahmestelle (19) am Boden (5) des Kessels (2) angeordnet ist und daß der Boden (5) im Kesselinneren im Bereich der Entnahmestelle (19) eine Vertiefung (20) aufweist.

18. Espressomaschine mit einem Kessel nach Anspruch 16 oder 17,
**dadurch gekennzeichnet**,
daß die Entnahmestelle (19) mit dem Eingang einer regelbaren elektrischen Kolbenpumpe verbunden ist, deren Ausgang das Brühwasser einer mit Kaffeemehl füllbaren Filtereinrichtung zuführt und daß der Ausgang der Kolbenpumpe über eine Ventileinrichtung wahlweise auch mit dem Rohr (6) verbindbar ist, so daß das dem Rohr (6) zugeleitete Wasser je nach Wassermenge gezielt zur Dampferzeugung oder zur Erzeugung von Heißwasser verwendet werden kann.

## Claims

1. An unpressurized boiler vessel (2) for an espresso coffee maker, with an electric heating element (3) for heating water that is adapted to be filled into the boiler vessel (2) for producing brewed beverages,
**characterized in that** the electric heating element (3) is arranged outside the boiler vessel (2), that the heating element (3) is only in indirect thermal contact with the boiler vessel (2) through a tube (6), that steam for heating and frothing up liquids may be generated in the tube (6) by the introduction of minor quantities of water, and that a mechanical connection exists between both the boiler vessel (2) and the tube (6), and between the tube (6) and the heating element (3).

2. The boiler vessel as claimed in claim 1,
**characterized in that** the upper side (12) of the tube (6) is in thermal contact with the bottom (5) of the boiler vessel (2), and that the heater coil (7) is in thermal contact with the underside (13) of the tube (6) opposite the upper side (12).

3. The boiler vessel as claimed in claim 2,
**characterized in that** the upper side (12) and the underside (13) of the tube (6) are of a flat configuration, and that the upper side (14) of the heater coil (7) which is in thermal contact with the underside of the tube (6) is equally flattened.

4. The boiler vessel as claimed in claim 1,
**characterized in that** the heating element (3) includes a heater coil (7) along which the tube (6) extends.

5. The boiler vessel as claimed in claim 4,
**characterized in that** the tube (6) is arranged at the bottom (5) of the boiler vessel (2).

6. The boiler vessel as claimed in claim 4,
**characterized in that** the heater coil (7) and the tube (6) extend in U-shape and include respective legs (8, 9 and, respectively, 10, 11) that extend in juxtaposed position in spaced relationship.

7. The boiler vessel as claimed in claim 1,
**characterized in that** a holding plate (15) following the extent of the tube (6) in substantial sections thereof is fastened to the bottom (5) and has in turn fastened thereto the tube (6) and the heating element (3).

8. The boiler vessel as claimed in claim 7,
**characterized in that** the holding plate (15) includes sheet-metal tabs (16) that embrace the tube (6) and the heater coil (7) in positive engagement therewith, preferably from outside, and that the heating element (3) is soldered to the tube.

9. The boiler vessel as claimed in claim 7,
**characterized in that** the holding plate (15) includes a sheet-metal section (17) extending into the space (18) formed between the two legs (10, 11) of the heater coil (7).

10. The boiler vessel as claimed in claim 9,
**characterized in that** a small distance is maintained between the bottom (5) of the boiler vessel (2) and the sheet-metal section (17) of the holding plate (15).

11. The boiler vessel as claimed in claim 3,
**characterized in that** the tube (6) is soldered to the bottom (5) of the boiler vessel (2).

12. The boiler vessel as claimed in claim 7,
**characterized in that** the holding plate (15) is soldered to the bottom (5) of the boiler vessel (2).

13. The boiler vessel as claimed in claim 7,
**characterized in that** the holding plate (15) is fastened to the bottom (5) of the boiler vessel (2) by a heat transfer compound.

14. The boiler vessel as claimed in any one of the claims 12 or 13,
**characterized in that** the tube (6), the heater coil (7) and the holding plate (15) are soldered together at respective points of contact and/or at the edges of the contact points.

15. The boiler vessel as claimed in claim 4,
**characterized in that** the boiler vessel (2) has a bottom (5) of substantially rectangular cross-sectional area, with the legs (8, 9) of the tube (6) and the legs (10, 11) of the heater coil (7) extending along the long dimensions of this area.

16. The boiler vessel as claimed in claim 1,
**characterized in that** the boiler vessel (2) is provided with an outlet port (19).

17. The boiler vessel as claimed in claim 16,
**characterized in that** the outlet port (19) is arranged at the bottom (5) of the boiler vessel (2), and the bottom (5) has in the vessel interior a recess (20) in the vicinity of the outlet port (19).

18. An espresso maker having a boiler vessel as claimed in claim 16 or claim 17,
**characterized in that** the outlet port (19) is connected to the inlet of a controllable electric reciprocating pump, the pump outlet delivering hot water to a filter device adapted to receive coffee grinds, and that the outlet of the reciprocating pump is selectively connectible to the tube (6) through a valve device, so that water supplied to the tube (6) may be used either for generating steam or for producing hot water, depending on the amount of water supplied.

## Revendications

1. Bouilloire (2) sans pression pour une cafetière "expresso", comprenant un dispositif de chauffage électrique (3) pour chauffer de l'eau pouvant être introduite dans la bouilloire (2) à des fins de préparation d'infusions (boissons chaudes), **caractérisée en ce** que le dispositif de chauffage électrique (3) est agencé à l'extérieur du récipient (2) proprement dit de la bouilloire, que le dispositif de chauffage (3) est seulement en contact thermique indirect avec ce récipient (2) par l'intermédiaire d'un tuyau (6), que de la vapeur peut être générée dans le tuyau (6) par introduction de quantités d'eau relativement faibles afin d'échauffer et de produire de la mousse sur des liquides et qu'une liaison mécanique est réalisée à la fois entre le récipient (2) et le tuyau (6) et entre le tuyau (6) et le dispositif de chauffage (3).

2. Bouilloire selon la revendication 1, **caractérisée en ce** que le côté supérieur (12) du tuyau (6) est en contact thermique avec le fond (5) du récipient (2) et qu'un serpentin chauffant (7) formant le dispositif de chauffage est en contact thermique avec le côté inférieur (13) du tuyau (6), situé à l'opposé du côté supérieur (12).

3. Bouilloire selon la revendication 2, **caractérisée en ce** que le coté supérieur (12) et le côté inférieur (13) du tuyau (6) sont aplatis et que le côté supérieur (14) du serpentin chauffant (7), en contact thermique avec le côté inférieur du tuyau (6), est également aplati.

4. Bouilloire selon la revendication 1, **caractérisée en ce** que le dispositif de chauffage (3) est formé par un serpentin chauffant (7) le long duquel s'étend le tuyau (6).

5. Bouilloire selon la revendication 4, **caractérisée en ce** que le tuyau (6) est agencé sur le fond (5) du récipient (2).

6. Bouilloire selon la revendication 4, **caractérisée en ce** que le serpentin chauffant (7) et le tuyau (6) ont une configuration en U, de manière à former des branches (8, 9 ou 10, 11) s'étendant à distance l'une à côté de l'autre.

7. Bouilloire selon la revendication 1, **caracterisée en ce** qu'une pièce de maintien (15) en tôle, qui suit par des portions essentielles la configuration du tuyau (6), est fixée au fond (5), pièce à laquelle sont fixés à leur tour le tuyau (6) avec le dispositif de chauffage (3).

8. Bouilloire selon la revendication 7, **caractérisée en ce** que des pattes de tôle (16) sont formées sur la pièce de maintien (15) en tôle, pattes qui entourent le tuyau (6) et le serpentin chauffant (7) à complémentarité de formes, de préférence de l'extérieur, et que le dispositif de chauffage (3) est brasé au tuyau.

9. Bouilloire selon la revendication 7, **caracterisée en ce** que la pièce de maintien (15) comporte une portion de tôle (17) engagée dans l'espace libre (18) formé entre les deux branches (10, 11) du serpentin chauffant (7).

10. Bouilloire selon la revendication 9, **caractérisée en ce** que la portion de tôle (17) de la pièce de maintien (15) présente une faible distance du fond (5) du récipient (2).

11. Bouilloire selon la revendication 3, **caractérisée en ce** que le tuyau (6) est brasé sur le fond (5) du récipient (2).

12. Bouilloire selon la revendication 7, **caractérisée en ce** que la pièce de maintien (15) en tôle est brasée sur le fond (5) du récipient (2).

13. Bouilloire selon la revendication 7, **caractérisée en ce** que la pièce de maintien (15) en tôle est fixée au fond (5) du récipient (2) par une pâte thermoconductrice.

14. Bouilloire selon la revendication 12 ou 13, **caractérisée en ce** que le tuyau (6), le serpentin chauffant (7) et la pièce de maintien (15) sont brasés ensemble à leurs points de contact et/ou aux bords de leurs points de contact.

15. Bouilloire selon la revendication 4, **caractérisée en ce** que le récipient (2) possède un fond (5) ayant essentiellement une forme rectangulaire en section droite, les branches (8, 9) du tuyau (6) et les branches (10, 11) du serpentin chauffant (7) s'étendant le long des grands côtés de ce fond.

16. Bouilloire selon la revendication 1, **caractérisée en ce** que le récipient (2) présente un point de prélèvement (19).

17. Bouilloire selon la revendication 16, **caractérisée en ce** que le point de prélèvement (19) est agencé sur le fond (5) du récipient (2) et que le fond (5) présente un creux (20) à l'intérieur du récipient dans la zone du point de prélèvement (19).

18. Cafetière "expresso" comportant une bouilloire selon la revendication 16 ou 17, **caractérisée en ce** que le point de prélèvement (19) est raccordé à l'entrée d'une pompe à piston électrique réglable dont la sortie amène l'eau d'infusion à un dispositif de filtration pouvant être rempli de mouture de café et que la sortie de la pompe à piston peut être raccordée aussi, sélectivement, au tuyau (6) au moyen d'un dispositif de soupape, de sorte que l'eau dirigée vers le tuyau (6) est utilisable sciemment, suivant la quantité d'eau qui lui est envoyée, pour la génération de vapeur ou pour la production d'eau chaude.
